# EUROPEAN PATENT SPECIFICATION

(11) **EP 4 380 893 B1**
(45) Date of publication and mention of the grant of the patent: **10.09.2025**
(21) Application number: 21790245.1
(22) Date of filing: 04.08.2021
(51) Int. Cl.: C01B 3/38, C01B 3/48

(54) **METHOD FOR HYDROGEN PRODUCTION COUPLED WITH CO2 CAPTURE**
VERFAHREN ZUR MIT CO2-ABSCHEIDUNG GEKOPPELTEN WASSERSTOFFHERSTELLUNG
PROCÉDÉ DE PRODUCTION D'HYDROGÈNE COUPLÉ À LA CAPTURE DE CO2

(43) Date of publication of application: 12.06.2024
(73) Proprietor: NEXTCHEM TECH S.p.A., 00156 Rome (IT)
(72) Inventor: IAQUANIELLO, Gaetano, 00153 Rome (IT); COLOZZI, Michele, 00181 Rome (IT); PALO, Emma, 84091 Battipaglia (SA) (IT); ANTONELLI, Menica, 00166 Rome (IT); ROMAGNUOLO, Salvatore, 00174 Rome (IT); TARASCHI, Stefania, 00193 Rome (IT)
(74) Representative: Santi, Filippo
(86) International application number: PCT/IT2021/000039
(87) International publication number: WO 2023/012836

(56) References cited:
- WO-A1-2016/073500
- WO-A1-2022/038089
- US-A- 1 904 593
- US-A- 1 960 886
- US-A1- 2002 108 307

## Description

The present invention concerns a method for hydrogen production coupled with CO₂ capture, which is also configured to ensure zero export steam.

As it is known, carbon dioxide is a by-product of many industrial processes and a final combustion product of carbon containing fuels. As such, it is generated in large quantities and emitted in the gaseous effluents of industrial and energy production sites, and in smaller and distributed amounts in building heating, transportation, etc.

In all cases, since process feedstocks and fuels are almost all of fossil origin, the CO₂ emitted contributes to the anthropogenic carbon emission, causing an increase of the CO₂ concentration in the atmosphere and contributing to climatic changes.

CO₂ is a primary greenhouse gas and it is estimated that stationary CO₂ emissions contribute for about 60% of the overall global CO2 emissions [*https:*//*www.ipcc.ch*/*pdf*/*special-reports*/*srccs*/*srccs_chapter2.pdf [Accessed April 2018]*].

Main industrial sectors contributing to the stationary CO₂ emissions are represented by power plants, and energy intensive industries. In particular, the refinery sector contributes to around 6% of the total stationary CO₂ emissions [Jiri van Straelen, Frank Geuzebroek, Nicholas Goodchild, Georgios Protopapas, Liam Mahony, CO2 capture for refineries, a practical approach, Energy Procedia 1 (2009) 179-185*].*

On the other hand, demand of hydrogen has reached almost 75 million of tons in 2018 and increases by approximately 6% per year [*IEA. org*/*reports*/*the-future-of-hydrogen, June 2019],* with more than 50% used for refinery applications as hydrotreating and hydrocracking and the remaining fraction mainly for ammonia and methanol production. According to IEA, roughly 0,83 bn tons of CO₂ are associated today to yearly hydrogen production. The importance of this carbon flow is such that in the coming years the CO₂ emissions associated to each single chemical process are going to become the first and major parameter to assess for technology selection including the one to make hydrogen.

Steam Reforming is currently the most cost-effective technology to produce hydrogen, particularly in refineries, where natural gas or off gases are used as feedstock. Steam Reforming of natural gas and light naphtha is the workhorse for such production being a quite efficient process, with the highest H₂/CO ratio and the lowest Cost of Production (CoP). Such process accounts for at least up to 20% of the CO₂ emissions in refinery [J. van Straelen, F. Geuzebroek, N. Goodchild, G. Protopapas, L. Mahony, International Journal of greenhouse control, 4 (2010) 316*].*

In steam reforming process, a part of CO₂ (typically ~ 50-60% of the total amount) is generated inside the process syngas in the steam reforming (CH₄ + H₂O = CO + 3H₂) and water gas shift (CO + H₂O = CO₂ + H₂) reactor and downstream stages, while another part (40-50%) is additionally generated in the steam reformer furnace where heat provided by external fuel combustion supplies the necessary thermal input to the endothermic reaction [G. Collodi, Chemical Engineering Transactions 19 (2010) 37]*.* It is estimated that around 0.9kg CO₂ are produced per Nm³ of H₂.

In addition, the presence of a furnace with burners installed inside makes the steam reformer configuration quite complex and the overall plant is characterized by quite large footprint.

As a matter of fact, the key challenge in achieving a carbon-neutral energy and production systems is to decarbonize the sectors that are currently heavily dependent on fossil fuel resources, such as oil and natural gas. The most promising option for future decarbonization of final energy and feedstock use in the chemical industry is to convert the relatively abundant potential of wind and solar energy, produced in the form of electricity into heat, chemicals and fuels. In fact, electrification has the potential to release major progress on sustainability and reduction in fossil energy and feedstock use. Electrification of conventionally fired chemical reactors has the potential not only to reduce CO₂ emissions but also to provide more flexible and compact solutions for heat generation.

Under the assumption that the cost of electricity is going down in the future and more and more renewable electricity will be available, it makes sense to replace the combustion step which today supplies the heat of reaction in the steam reformer with an electric device, with the possibility to eliminate the CO₂ emissions contribution from furnace burners. US 2002/108307 A1 discloses an electrically heated reformer.

In addition, the possibility to maximize the efficiency of thermal exchange may also help to reduce the feed consumption, thereby limiting CO₂ emissions from the process side as well.

Under such basis a reconfiguration of process architecture is required.

According to the prior art, the process architecture of a conventional Hydrogen Production Unit (HPU) with steam reforming of natural gas feedstock includes the following conventional process steps:
(i) Natural Gas compression (not shown) and preheating,
(ii) Olefins Hydrogenation and removal of sulfur components (in a Pre-Treatment Unit 1),
(iii) Steam Reforming (in a Fired Heated Steam Reformer 2),
(iv) Heat recovery from both process stream and flue gas by Steam Generation and steam superheating (not shown),
(v) Conversion of carbon monoxide by Shift reaction (in a Water Gas Shift Reactor 3),
(vi) Purification of the hydrogen by Pressure Swing Adsorption (in a Pressure Swing Adsorber, or PSA 4).

Optionally in between steps (ii) and (iii) a pre-reforming step may be added, depending on the hydrocarbon feedstock used.

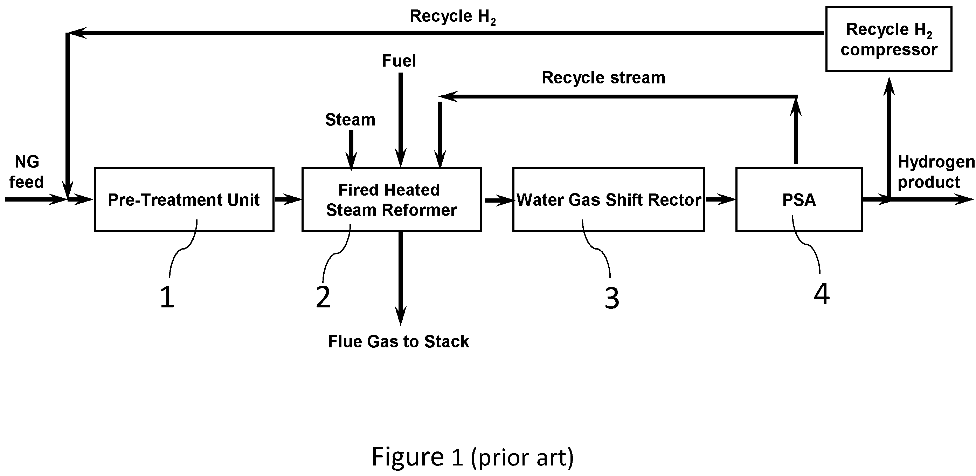

Making reference to Figure 1, a block diagram of a conventional Natural Gas Hydrogen Production Unit is shown, wherein export steam is not illustrated but is anyway present and it is described below and wherein the natural gas feedstock is fed under pressure to a pre-treatment unit 1 for the removal of those compounds that are detrimental for the steam reforming catalyst downstream. The pre-treatment unit 1 performs a first hydrogenation step and a second desulfurization step, optionally combined in one single step. The first step is conducted in a fixed bed catalytic reactor using CoMox or NiMox catalyst to hydrogenate organic sulfur into H₂S and organic chlorine components into hydrogen chloride. Olefins present in the feed are hydrogenated as well in this step.

The required hydrogen (~3 mol%, typical value with natural gas feedstock) is recycled from the H₂ Product stream and/or taken from an available hydrogen source from battery limit. The produced hydrogenated compounds are then sent to the desulfurization step, in which they react typically with zinc oxide beds for H₂S adsorption, optionally equipped with a material for hydrogen chloride adsorption.

The treated feedstock is then mixed with a controlled quantity of steam according to the selected value for the steam/carbon molar ratio (S/C = 3 mol/mol, typical value) and preheated at 550°C (typical value) in the convection section of the reformer furnace 2.

The heart of the process is the endothermic reaction of methane with steam over Ni catalyst (reaction 1).

CH₄ + H₂O ⇔ CO + 3H₂ ΔH₀ =+206 kJ/mol (1)

The reaction is conducted in a tubular catalytic reactor heated up by external fuel combustion in the radiant section of a furnace. In series to the main steam reforming reaction, the water gas shift reaction (reaction 2) converts part of the CO produced by the first reaction into additional H₂ and CO₂.

CO + H₂O ⇔ CO₂ + H2 ΔH₀ = - 41 kJ/mol (2)

The process steam added to the feed is in excess of the stoichiometric quantity so as to improve the hydrocarbons conversion and prevent any carbon deposition over the catalyst. Reforming temperatures are selected in a high range (typically 850 ÷ 920 °C) in order to obtain high hydrogen yields. The operation of the steam reforming reaction inside a fired heater causes an excess heat generation related to the low thermal efficiency of the radiant section. The excess heat is normally recovered in the convection section through high pressure steam generation.

Besides this, additional steam is generated by the process gas boiler employed to cool down the process syngas at the outlet of the steam reformer. The total steam produced is more than necessary for the process itself, therefore, a quantity of export steam is made available at battery limits as a by-product. The cooled process gas is then fed to a high temperature shift conversion stage (HTS) at an inlet temperature of about 320 °C.

The HTS shift reactor 3 is a fixed bed adiabatic reactor using an iron/chromium/copper oxide catalyst which converts the carbon monoxide and steam present in the syngas into additional hydrogen and carbon dioxide according to the water gas shift reaction (reaction 2). In some cases, an additional stage of shift conversion at lower temperature (LTS) is installed downstream and operated.

The process syngas at the outlet of the shift conversion stage is cooled down to about 40 °C through a heat recovery section and a final cooler. Downstream, the equipment for water condensate removal is installed, from which the syngas is sent to a PSA unit 4 to perform the raw hydrogen purification.

The PSA unit operates through short adsorption/ desorption cycles conducted over selected adsorbent materials and operated in parallel vessels at different time stages.

The hydrogen is released from the PSA unit 4 at the set pressure (typically about 20 barg for refinery applications, for example). The hydrogen recovery factor of PSA can achieve values up to 90%, while the hydrogen balance, together with the impurities present in the raw hydrogen stream, is released in an off-gas stream and leaves the PSA unit 4 at low pressure (~0.3 barg). PSA unit 4 can reach hydrogen purity up to 99,9999% vol. Typical hydrogen purity specification in refinery is >99.9%.

The off-gas from PSA recovered at near atmospheric pressure and containing the produced CO₂ and residual hydrogen (an exemplary composition of this stream being CH₄ 18%mol, CO 10,24%mol, CO₂ 45,10%mol, H₂ 26%mol, H₂O 0,55%mol) is recycled back (recycle stream) to the reformer furnace 2, where residual hydrogen and CO are burned with make-up fuel and the generated flue gas is sent to the stack.

It is also known that carbon capture and storage (CCS) is the process of removing or reducing the CO₂ content of streams normally released to the atmosphere and transporting captured CO₂ to a location for permanent storage. CCS can be applied to a wide range of large single-point sources, such as process streams, heater and boiler exhausts, and vents from a range of high CO₂ footprint industries, including power generation, refining, natural gas treating, chemicals, cement production and steel production.

There are three main CO₂ capture systems associated with different combustion processes, namely, post-combustion, pre-combustion and oxyfuel combustion.

In Post combustion capture processes the removal of CO₂ is performed after combustion has taken place. The flue gases exiting combustion plants are typically treated using chemical or physical sorbents to selectively remove CO₂ from the gas mixture. It is an end-of-pipe solution, where CO₂ is removed from the flue gas before the flue gas is emitted to atmosphere via the stack.

The advantage of the post-combustion process is that it is suited not only to new installations but may also be retrofitted to existing plants *[*SUZANNE FERGUSON and MIKE STOCKLE, Carbon capture options for refiners, PTQ Q2 2012 77].

The main challenge is that the CO₂ level in combustion flue gas is normally quite low, from 5%vol to 20%vol depending on off-gas content in mixed fuel gas.

In Pre-combustion capture processes the fuel (normally coal or natural gas) is pretreated before combustion. In particular, it is generally gasified or reformed to a syngas stream, which is then subject to water-gas shift reaction and subsequent gas clean up to separate the produced hydrogen from the CO₂. The gas cleaning step is usually achieved using similar methods employed as described for post-combustion processes, although there are advantages to removing the CO₂ from the syngas mainly associated with the pressure of the gas which reduces compression energy requirements. The hydrogen is used as the input fuel to the combustion process, whilst the CO₂ is available in a concentrated form for compression, transport and storage. The high concentration (>20%) of CO₂ in the H₂/CO₂ fuel gas mixture facilitates the CO₂ separation [S.T. Wismann, J.S. Engbaek, S.B. Vendelbo, F.B. Bendixen, W.L. Eriksen, K. Aasberg-Petersen, C. Frandsen, I. Chorkendorff, P.M. Mortesen, Electrified methane reforming: A compact approach to greener industrial hydrogen production, Science, 2019, 364, 756-759*].*

In Oxyfuel combustion, oxygen, instead of air, is used for combustion. This reduces the amount of nitrogen present in the exhaust gas that affects the subsequent separation process. The major components of the flue gases are CO₂, water, particulates and SO₂. After the removal of particulates, SO₂ and water, the remaining gases contain a high concentration of CO₂, about 80-98% (depending on the fuel used).

Both pre combustion and post combustion technologies for CO₂ capture can be applied to a steam reforming plant.

The pre combustion technologies would apply to the syngas stream exiting water gas shift reactors, whereas the post combustion technologies would apply to flue gas from furnace.

However, in the first case, only the CO₂ coming from the process would be captured, in the second case all CO₂ can be captured, however the cost of such option would be higher taking into consideration the low CO₂ partial pressure in the flue gas, when compared to CO₂ partial pressure in the syngas. Additionally, since the flue gas is available at about atmospheric pressure, large size CO₂ capture systems would be needed, making the cost of such option still higher.

Electrical steam reforming has been studied a lot in the last years. In this context still recently, Haldor Topsoe has published about the joint research work they are carrying out in collaboration with the Technical University of Denmark based on the application of electric power to internally catalytic coated tubes for steam reforming reaction [S.T. Wismann, J.S. Engbaek, S.B. Vendelbo, F.B. Bendixen, W.L. Eriksen, K. Aasberg-Petersen, C. Frandsen, I. Chorkendorff, P.M. Mortesen, Electrified methane reforming: A compact approach to greener industrial hydrogen production, Science, 2019, 364, 756-759]. An experimental and model investigation is under progress to check the performance of the proposed solution. First results showed that the intimate contact between the electric heat source and the reaction site may drive the reaction close to thermal equilibrium, increase the catalyst utilization and limit unwanted byproduct formation, as well as potentially reduce in size the current reformer platforms by an order of magnitude.

In view of all the above, it is evident the need for reducing or removing CO₂ emissions resulting from the production of hydrogen starting from hydrocarbons, in particular natural gas.

In this context and in consideration that government regulations are more and more forcing the industry to reduce CO₂ emissions, it is proposed the solution according to the present invention, with the aim of providing for replacing the combustion step, which supplies the heat of reaction in the steam reformer according to the prior art, with a step wherein heat is provided by an electric device, by maximizing the efficiency of thermal exchange and improving conversion of natural gas to H₂, to reduce the natural gas feed consumption, thereby limiting CO₂ emissions from the process side as well.

In this context it is proposed the solution according to the present invention, providing for a method for hydrogen production coupled with CO₂ capture based on the coupling of an electrical steam reformer with CO₂ capture technology, in order to enable the simultaneous production of a hydrogen stream with a CO₂ stream at minimum CO₂ emissions.

Moreover, according to the present invention, the produced CO₂ stream can be valorized for downstream use.

In particular, the method for hydrogen production coupled with CO₂ capture according to the present invention involves the use of an electrical steam reformer instead of a fired heated steam reformer, in order to maximize the efficiency of thermal exchange, improve conversion of natural gas to H₂ and eliminate the CO₂ contribution coming from fuel combustion.

The method for hydrogen production coupled with CO₂ capture according to the present invention is based on the innovative proposal that by replacing a conventional fired heated steam reformer with an electrically heated steam reformer, the stream resulting after separation of the hydrogen product can be recycled to the feed. Only a small amount needs to be purged to avoid accumulation of inert components in the system, if the amount in the feed is not compatible with the required purity of produced hydrogen.

It is therefore an aim of the present invention to provide a method for hydrogen production coupled with CO₂ capture allowing for overcoming the limits of the solutions according to the prior art and achieving the previously described technical results.

A further aim of the invention is that said method for hydrogen production coupled with CO₂ capture can be implemented with substantially limited costs.

Not last aim of the invention is that of proposing a method for hydrogen production coupled with CO₂ capture being substantially simple, reliable and in particular less risky in terms of explosion related to combustion.

It is therefore a first specific object of the present invention a method for hydrogen production according with claim 1.

In particular, according to the present invention, the syngas production system comprises a desulfurization unit upstream the electrical steam reformer, sulfur, chlorides and olefins being removed from the hydrocarbon feed in said desulfurization unit.

In particular, according to the invention, at least part or all of the recycle stream is fed to the desulfurization unit.

Alternatively, according to the present invention, CO₂ is removed from said hydrogen enriched syngas comprising hydrogen and CO₂ or from said compressed recycle stream, or both.

Moreover, always according to the invention, part of the recycle stream is intermittently or continuously purged, in particular 7 vol% or less of the recycle stream is purged, preferably between 0.1 and 5 vol% of the recycle stream is purged and most preferably about 2 vol% of the recycle stream is purged.

Additionally, according to the present invention, the steam-to-carbon ratio in said step of reacting said hydrocarbon feed added with said compressed recycle stream with steam is comprised between 2.8 and 3.

In particular, according to the invention, electricity fed to said electrical steam reforming is derived from renewable sources, for example solar, wind or hydro.

Finally, it is an additional specific object of the present invention a plant for hydrogen production starting from a hydrocarbon feed, comprising an electrically powered steam reformer and at least one CO₂ capture system, arranged downstream said electrically powered steam reformer.

The invention will be disclosed herein below for illustrative, but non limitative purposes, according to preferred embodiments, with reference in particular to the figures of the enclosed drawing, wherein:
- figure 1 shows a block diagram of a natural gas hydrogen production unit according to the prior art,
- figure 2 shows a block diagram of a plant for hydrogen production coupled with CO₂ capture according to a first embodiment of the method of the present invention,
- figure 3 shows a block diagram of a plant for hydrogen production coupled with CO₂ capture according to a second embodiment of the method of the present invention, and
- figure 4 shows a block diagram of a plant for hydrogen production coupled with CO₂ capture according to a third embodiment of the method of the present invention.

The method for hydrogen production coupled with CO₂ capture proposed according to the present invention can be implemented according to three different configurations.

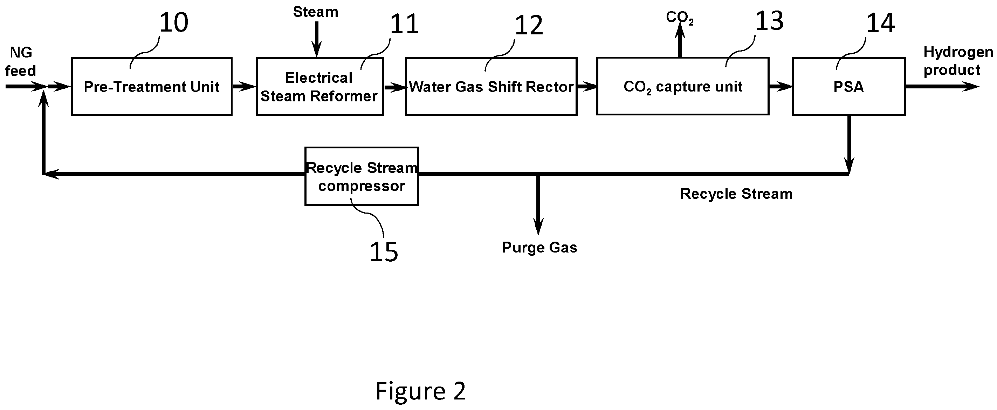

Making reference to figure 2, it is shown a block diagram of a plant for hydrogen production coupled with CO₂ capture according to a first embodiment of the method of the present invention, based on electrical steam reforming and CO₂ capture.

In particular, the method for hydrogen production coupled with CO₂ capture according to this embodiment is composed of the following steps: a natural gas (NG) feed is mixed with a recycled stream coming from a pressure swing absorption (PSA) unit 14, heated up to 380°C and conveyed to a pre-treatment unit 10, where sulfur, chloride and olefins are removed. The purified process stream is then mixed with steam, in a preferred steam-to-carbon ratio of 2.8-3. The ratio 2.8 is optimized to have zero export steam. It is possible to further lower the steam to carbon ratio depending on the possibility to have a catalyst able to operate at low steam-to-carbon ratio without deactivation.

The stream is subsequently pre-heated through a heat exchanger (not shown) up to 550 °C. The heat exchanger preferably uses the reformed stream as heat exchanging fluid, the temperature of the reformed stream being 850-900°C, to heat up the process stream. The heat of the reformed stream can also be used in a different heat exchanger to produce the steam required for the reforming reaction. Alternatively, a stand-alone heater can be used, such as an electric heater or a gas heater. In particular, the use of an electric heater would be preferable in order to eliminate the CO₂ contribution coming from fuel combustion. Alternatively, in order to reduce electric power consumption, it is possible to replace the electrical heater with a gas heating step, carried out by burning a portion of natural gas with air. The flue gas generated is sent to stack. However, this solution is less compact and would be more impacting in terms of CO₂ emissions, but would make the system a slightly bit more independent from availability of power produced from renewable feedstock.

The pre-heated stream is then sent to an electrical steam reformer 11, at a temperature of the pre-heated stream that allows both to protect the catalyst of the steam reformer 11 and to enter on the catalytic bed of the steam reformer 11 already over the threshold catalyst temperature.

Along the catalytic bed a temperature profile is established that is dependent on both endothermicity of the reaction and the heat provided by the electrical heat source, to achieve at the outlet of catalytic bed a temperature in the range of 850-900°C.

In some plant configurations, mainly when heavy feedstocks are used, a pre-reforming step can be installed upstream to the steam reformer 11. In this additional step a preliminary reforming occurs at lower temperature.

The reformed stream is subsequently cooled down, the heat of the reformed stream being preferably at least partly recovered to produce steam or to pre-heat the process stream upstream the reformer 11 as discussed above, the outlet stream, at a high or medium temperature, depending on available heat, preferably at 340°C, is then sent to a water gas shift reactor 12, in which a certain CO conversion to CO₂ is reached.

Water gas shift conversion may be carried out at high (water gas shift inlet temperature about 320°C-350°C) or medium temperature (water gas shift inlet temperature about 250°C-280°C), depending on the heat recovery in the overall process.

The process stream from the water gas shift reactor 12, which is a stream that is rich of H₂ and CO₂, is cooled by a series of exchangers (not shown) to recover heat and then is sent to a CO₂ capture unit 13 (namely amine, membrane separation, cryogenic, adsorption systems and combination of them) where the CO₂ is separated; a pure CO₂ stream is collected and, eventually, valorized.

Finally, the gas rich in H₂ is sent to a PSA system 14 to be purified, meanwhile the off-gas or recycle stream is compressed in a compressor 15 and recycled to the front end of the plant. A split of purge gas (in the order of 2-3% of total) is separated from the main recycle stream to manage the amount of N₂ or other inerts which are present in the natural gas to prevent accumulation thereof in the recycle stream.

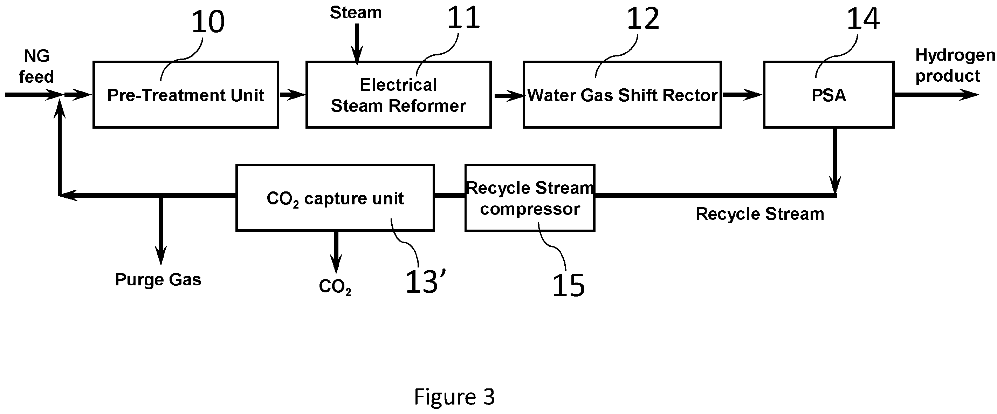

With reference to Figure 3, in an alternative plant for hydrogen production coupled with CO₂ capture according to a second embodiment of the method of the present invention, the CO₂ capture stage is installed on the recovered and compressed recycle stream from PSA.

According to this alternative configuration, the process stream from the water gas shift reactor 12, after heat recovery is sent to the PSA system 14 to be purified, meanwhile the off-gas or recycle stream is compressed in a compressor 15 and then is sent to a CO₂ capture unit 13' where the CO₂ is separated (compression and CO₂ separation can also be integrated a single unit) ; the pure CO₂ stream is collected and the remaining stream is recycled to the front end of the plant, after an optional purging of around 2-3wt%.

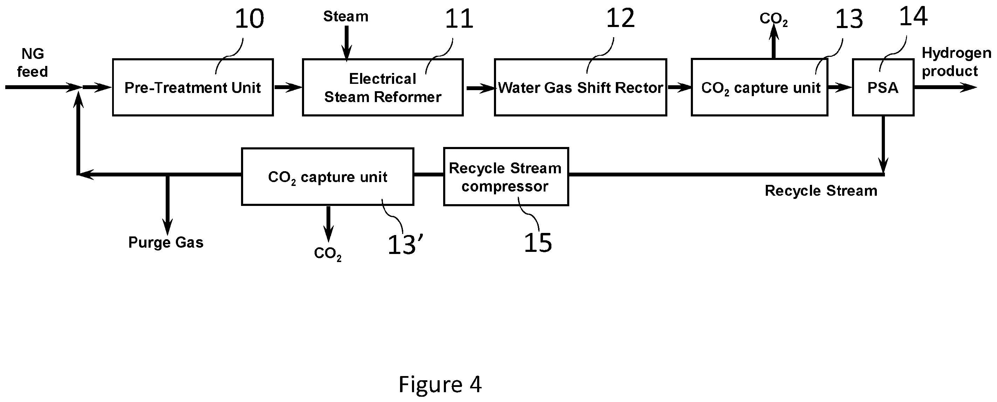

Finally, in a third embodiment of the method of the present invention, a plant for hydrogen production coupled with CO₂ capture is shown in Figure 4, wherein two CO₂ capture units are installed both downstream the water gas shift reactor 12 and on the recycle stream from PSA unit 14.

The method for hydrogen production coupled with CO₂ capture according to the present invention represents an overcoming of disadvantages of the state of the art technology based on conventional fired heated reformer coupled with CO₂ capture due to the fact that:
- CO₂ produced is intrinsically lower, enabling for a reduction of this parameter up to 45%,
- CO₂ capture efficiency is higher, due to the fact that CO₂ capture is carried out on the process stream, where a higher concentration of CO₂ is present,
- total CO₂ emission to the atmosphere (the amount not captured) is lower due to higher CO₂ capture efficiency.

The method for hydrogen production coupled with CO₂ capture according to the present invention is based on the assumption that electricity needed in order to operate the electric steam reformer is produced from renewable sources, thus allowing for no CO₂ production. However, in a near term scenario of energy transition, the availability of renewables may not completely satisfy the hydrogen market based on such technology. Since the method for hydrogen production coupled with CO₂ capture according to the present invention enables for a reduction of CO₂ emission, a breakeven point has been calculated, making the assumption that to make equal the CO₂ emissions of a fired heated reformer and an electrical one, up to 30-40% of power from fossil/coal may be accepted, the remaining share coming from renewables.

### Example 1.

The method for hydrogen production coupled with CO₂ capture according to the present invention was used to treat a natural gas feed with the composition shown in Table 1:

**Table 1**

| Total Molar Component Fractions | % vol |
|---|---|
| Pentane | 0 |
| Butane | 0 |
| i-butane | 0 |
| Propane | 0.5 |
| Ethane | 2 |
| Hexane | 0 |
| Methane | 95.5 |
| CO | 0 |
| CO₂ | 0 |
| H₂ | 0 |
| H₂O | 0 |
| N₂ | 2 |
| O₂ | 0 |
| Ar | 0 |
| H₂S | 0 |
| SO₂ | 0 |
| i-pentane | 0 |

The main technical results achieved by the method for hydrogen production coupled with CO₂ capture according to the present invention were evaluated, in comparison with a traditional fired heated steam reformer, by treating the natural gas according to the embodiment disclosed with reference to figure 2 and are reported in Table 2, assuming two different levels of CO₂ removal efficiency.

**Table 2**

| Parameter | Fired heated Steam Reformer | Fired heated steam reformer with CO₂ capture on flue gas | Electrical Steam Reformer - CO₂ Capture Efficiency 99% | Electrical Steam Reformer - CO₂ Capture Efficiency 70% |
|---|---|---|---|---|
| Plant Capacity (Nm³/h) | 5000 | 5000 | 5000 | 5000 |
| Molar Steam - to - Carbon ratio | 3.0 @ SMR | 3.0 @ SMR | 2.8 | 2.8 |
| Tᵢₙₗₑₜ SR (°C) | 620 | 620 | 550 | 550 |
| Tₒᵤₜₗₑₜ SR (°C) | 860 | 860 | 870 | 870 |
| Tᵢₙₗₑₜ WGS (°C) | 340 | 340 | 340 | 340 |
| Tₒᵤₜₗₑₜ WGS (°C) | 414 | 414 | 410 | 421 |
| Hydrogen pressure, B.L. (barg) | 30 | 30 | 21.6 | 21.6 |
| Hydrogen Temperature, B.L. (°C) | 42 | 42 | 40 | 40 |
| Natural Gas Consumption (kg/Nm³ H₂) | 0.32 | 0.32^{(*)} | 0.19^{(*)} | 0.19 (*) |
| Power Consumption (kWh/Nm³ H₂) | 0.06 | 0.06^{(*)} | 1.20^{(*)} | 1.28 (*) |
| CO₂ Produced | 0.895 | 0.895 | 0.50 | 0.50 |
| (kgCO₂/Nm³ H₂) | | | | |
| CO₂ captured (%) | 0 | 90.0 | 98.6^{(**)} | 97.1^{(**)(***)} |
| Efficiency to hydrogen (kcal/Nm³) | 3760 | 3760 | 2168 | 2168 |

| | | | | |
|---|---|---|---|---|
| SR standing for Steam Reformer WGS standing for Water Gas Shift Reactor B.L. standing for Battery Limits (*) without taking into consideration optional utility consumption of CO₂ removal step (in case the CO₂ capture step should need electric power or natural gas consumption to be operated) (**) Residual part in purge gas (***) CO₂ captured (%) being higher than indicated capture efficiency (70%) due to CO₂ recycling back at the front end of the plant | | | | |

Efficiency to hydrogen has been calculated as Feed(LHV) + Fuel (LHV)/Hydrogen production (Nm³), LHV standing for Lower Heating Value.

### Example 2.

The technical results achieved by the method for hydrogen production coupled with CO₂ capture according to the present invention were also evaluated, in comparison with a traditional fired heated steam reformer, by treating the same natural gas of the previous example according to the embodiment disclosed with reference to figure 3. These results are reported in Table 3, assuming two different levels of CO₂ removal efficiency as for the previous example.

### (Table 3 follows)

**Table 3**

| Parameter | Fired heated Steam Reformer | Fired heated steam reformer with CO₂ capture on flue gas | Electrical Steam Reformer - CO₂ Capture Efficiency 99% | Electrical Steam Reformer - CO₂ Capture Efficiency 80% |
|---|---|---|---|---|
| Plant Capacity, (Nm³/h) | 5000 | 5000 | 5000 | 5000 |
| Molar Steam - to - Carbon ratio | 3.0 @ SMR | 3.0 @ SMR | 2.8 | 2.8 |
| Tᵢₙₗₑₜ SR (°C) | 620 | 620 | 550 | 550 |
| Tₒᵤₜₗₑₜ SR (°C) | 860 | 860 | 870 | 870 |
| Tᵢₙₗₑₜ WGS (°C) | 340 | 340 | 340 | 340 |
| Tₒᵤₜₗₑₜ WGS (°C) | 414 | 414 | 410 | 417 |
| Hydrogen Pressure, B.L. (barg) | 30 | 30 | 21.6 | 21.6 |
| Hydrogen Temperature, B.L., (°C) | 42 | 42 | 40 | 40 |
| Natural Gas Consumption, (kg/Nm³ H2) | 0.32 | 0.32 (*) | 0.19 (*) | 0.19(*) |
| Power Consumption, (kWh/Nm³ H₂) | 0.06 | 0.06 (*) | 1.23^{(*)} | 1.28^{(*)} |
| CO₂ Produced, (kgCO₂/Nm³ H₂) | 0.895 | 0.895 | 0.50 | 0.50 |
| CO₂ captured (%) | 0 | | 98.6 | 97.7^{(***)} |
| Efficiency to hydrogen (kcal/Nm³) | 3760 | 3760 | 2168 | 2168 |

| | | | | |
|---|---|---|---|---|
| SR standing for Steam Reformer WGS standing for Water Gas Shift Reactor B.L. standing for Battery Limits (*) without taking into consideration optional utility consumption of CO₂ removal step (in case the CO₂ capture step should need electric power or natural gas consumption to be operated) (***) CO₂ captured (%) being higher than indicated capture efficiency (70%) due to CO₂ recycling back at the front end of the plant | | | | |

Efficiency to hydrogen has been calculated as Feed(LHV) + Fuel (LHV)/Hydrogen production (Nm³), LHV standing for Lower Heating Value.

### Example 3.

The technical results achieved by the method for hydrogen production coupled with CO₂ capture according to the present invention were also evaluated, in comparison with a traditional fired heated steam reformer, by treating the same natural gas of the previous examples according to the embodiment disclosed with reference to figure 4. These results are reported in Table 4, assuming a CO₂ removal efficiency of 70% on the CO₂ capture unit 13 installed downstream the water gas shift reactor and a CO₂ removal efficiency of 80% on CO₂ capture unit 13' installed on purge gas stream.

**Table 4**

| Parameter | Fired heated Steam Reformer | Fired heated steam reformer with CO₂ capture on flue gas | Electrical Steam Reformer - CO₂ Capture Efficiency 70% - 80% |
|---|---|---|---|
| Plant Capacity (Nm³/h) | 5000 | 5000 | 5000 |
| Molar Steam - to - Carbon ratio | 3.0 @ SMR | 3.0 @ SMR | 2.8 |
| Tᵢₙₗₑₜ SR (°C) | 620 | 620 | 550 |
| Tₒᵤₜₗₑₜ SR (°C) | 860 | 860 | 870 |
| Tᵢₙₗₑₜ WGS (°C) | 340 | 340 | 340 |
| Tₒᵤₜₗₑₜ WGS (°C) | 414 | 414 | 411 |
| Hydrogen Pressure, B.L. (barg) | 30 | 30 | 21.6 |
| Hydrogen Temperature, B.L. (°C) | 42 | 42 | 40 |
| Natural Gas Consumption (kg/Nm³ H₂) | 0.32 | 0.32(*) | 0.19(*) |
| Power Consumption (kWh/Nm³ H₂) | 0.06 | 0 . 06 (*) | 1.21^{(*)} |
| CO₂ Produced (kgCO₂/Nm³ H₂) | 0.895 | 0.895 | 0.50 |
| CO₂ captured | 0 | | 98.50^{(***)} |
| (%) | | | |
| Efficiency to hydrogen (kcal/Nm³) | 3760 | 3760 | 2168 |

| | | | |
|---|---|---|---|
| SR standing for Steam Reformer WGS standing for Water Gas Shift Reactor B.L. standing for Battery Limit (*) without taking into consideration optional utility consumption of CO₂ removal step (in case the CO₂ capture step should need electric power or natural gas consumption to be operated) (***) CO₂ captured (%) being higher than indicated capture efficiency (70%) due to CO₂ recycling back at the front end of the plant | | | |

Efficiency to hydrogen has been calculated as Feed(LHV) + Fuel (LHV)/Hydrogen production (Nm³), LHV standing for Lower Heating Value.

Independently on the type of installation of the CO₂ capture unit, the method for hydrogen production coupled with CO₂ capture according to the present invention allows to reduce the CO₂ emissions of up to 45%.

An important technical highlight has to be made with reference to inert components (such as nitrogen) possibly contained in natural gas.

One of the peculiar aspects of the method for hydrogen production coupled with CO₂ capture according to the present invention, independent of the embodiment, is the possibility to recycle back the off-gas from PSA directly to the feed section, thereby reducing the amount of needed make up feed, provided that a compression step is applied. This solution is not applied in conventional fired heated reformer, since in the latter case, due to the presence of at least one burner, it is more convenient, from a technical point of view, to recycle back the off-gas from PSA to the fuel section, thereby reducing the amount of needed make up fuel and simultaneously avoiding the step of off-gas from PSA recompression.

The main benefits of the method for hydrogen production coupled with CO₂ capture according to the present invention are highlighted herein below:
- reduced CO₂ production compared with fired heated steam reformer;
- if biogas is used as feed, the overall system will be completely carbon negative, being biogas a renewable feedstock;
- reduced feed consumption;
- absence of fuel consumption;
- no need of stack;
- higher efficiency (LHV basis);
- reduced noise;
- smaller size of the steam reforming reactor;
- complete recovery of feed from PSA, which can be recycled and mixed with make-up feed, instead to be burned in furnace;
- no export of steam, provided the steam-to-carbon ratio is kept in the preferred range 2.8-3.

Moreover, since electricity becomes cheaper and is increasingly coming from renewable sources, the benefits of the method for hydrogen production coupled with CO₂ capture according to the present invention will increase over time.

Additionally, according to the first embodiment disclosed above, wherein also the process stream upstream the reformer 11 is pre-heated in an electrical heater, the method for hydrogen production coupled with CO₂ capture according to the present invention also involves the following advantages:
- no need of convective section to recover heat from flue gas, this basically means that there is no need for flue gas duct;
- no need for combustion air feeding system.

With reference to the embodiments shown in Figure 2 and 4, the CO₂ capture in pre combustion enables for an increase of hydrogen partial pressure upstream of PSA. Therefore, the PSA can be of smaller size.

Still another advantage of the method for hydrogen production coupled with CO₂ capture according to the present invention is the possibility to avoid to recycle back a portion of hydrogen from battery limits to carry out the desulfurization step. In fact, the amount of hydrogen required for such a step is already included in the recycled stream from PSA. However, the proposed solution can work even with a recycled stream from PSA routed directly to the electrical steam reformer. In this last case, there is the need of hydrogen from battery limits to enable the hydrodesulfurization of the hydrocarbon feedstock.

Another advantage of the method for hydrogen production coupled with CO₂ capture according to the present invention is the possibility that no pollutant is released into the atmosphere. This last benefit is dependent on the end use for the split purge gas coming from the recycle stream (PSA off-gas). If it is sent to flare, it contributes to pollutants emissions. Otherwise, if it can be valorized, the environmental impact can be reduced.

Even if the purge gas is sent to flare, the overall CO2 emissions are significantly lower (about 90%) than CO₂ emissions of a conventional fired heated reformer coupled with CO2 capture.

Still another advantage, depending on plant capacity and type of used shift reactor, is that all required heat to make steam production and additional services, like feed preheating can be produced by heat recovery from process stream.

The present invention was disclosed for illustrative, non-limitating purposes, according to a preferred embodiment thereof, but it has to be understood that any variations and/or modification can be made by the persons skilled in the art without for this reason escaping from the scope of protection, as defined in the enclosed claims.

## Claims

1. Method for hydrogen production starting from a hydrocarbon feed, comprising the following steps:
- reacting said hydrocarbon feed added with a compressed recycle stream with steam, to obtain a gas stream comprising hydrogen, carbon monoxide and carbon dioxide, syngas;
- reacting carbon monoxide of the gas stream from the previous step with steam, to obtain a gas stream enriched with hydrogen and carbon dioxide;
- separating hydrogen from said enriched gas stream to obtain a hydrogen product stream and a recycle stream;
- compressing said recycle stream to obtain a compressed recycle stream;
- mixing said compressed recycle stream with said hydrocarbon feed;
the method additionally comprising:
- providing heat to said step of reacting said hydrocarbon feed with water steam, said heat being obtained by electrically powered sources;
and alternatively
a) removing CO₂ from said gas stream enriched with hydrogen and carbon dioxide, before separating hydrogen;
or
b) removing CO₂ from said compressed recycle stream, before mixing with said hydrocarbon feed;
or
c) removing CO₂ both from said gas stream enriched with hydrogen and carbon dioxide, before separating hydrogen and from said compressed recycle stream, before mixing with said hydrocarbon feed; and
- removing at least part of inert components from the recycle stream.

2. Method for hydrogen production according to claim 1, comprising a step of:
- removing sulfur, chlorides and olefins from said hydrocarbon feed added with a compressed recycle stream, before reacting with steam.

3. Method for hydrogen production according to claim 1, wherein said step of removing at least part of inert components from the recycle stream is performed by intermittently or continuously purging part of the recycle stream, to remove inert components.

4. Method for hydrogen production according to claim 3, wherein CO₂ is removed from the purge stream.

5. Method for hydrogen production according to claim 3 or 4, wherein 7 vol% or less of the recycle stream is purged, preferably between 0.1 and 5 vol% of the recycle stream is purged, more preferably about 2 vol% of the recycle stream is purged.

6. Method for hydrogen production according to any of claims 1-5, wherein, in the case where CO₂ is removed from said gas stream enriched with hydrogen and carbon dioxide, before separating hydrogen, the composition of the recycle stream before mixing with said hydrocarbon feed is the following:
CH₄: 14.5-15.5vol%
CO₂: 0.5-1.0vol%
N₂: 34.5-35.5 vol%
CO: 15.5-16.5 vol%
H₂: 31.5-32.5 vol%
H₂O: 1.0-1.5 vol%

7. Method for hydrogen production according to any of claims 1-5, wherein, in the case where CO₂ is removed from said compressed recycle stream, before mixing with said hydrocarbon feed, the composition of the recycle stream before mixing with said hydrocarbon feed is the following:
CH₄: 11.5-12.5 vol%
CO₂: 13.0-14.0 vol%
N₂: 29.0-30.5 vol%
CO: 16.0-17.0 vol%
H₂: 26.5-27.5 vol%
H₂O: 1.0-1.5 vol%
and preferably is the following: CH₄ 12.04vol%, CO₂ 13.64vol%, N₂ 29.56vol%, CO 16.54vol%, H₂ 27.06vol%, H₂O 1.15vol%.

8. Method for hydrogen production according to any of claims 1-5, wherein, in the case where CO₂ is removed both from said gas stream enriched with hydrogen and carbon dioxide, before separating hydrogen and from said compressed recycle stream, before mixing with said hydrocarbon feed, the composition of the recycle stream before mixing with said hydrocarbon feed is the following:
CH₄: 12.0-13.0 vol%
CO₂: 0.5-1.5 vol%
N₂: 31.0-32.0 vol%
CO: 14.5-15.0 vol%
H₂: 38.5-39.5 vol%
H₂O: 1.0-1.5 vol%

9. Method for hydrogen production according to any of the previous claims, wherein the steam-to-carbon ratio in said step of reacting said hydrocarbon feed added with said compressed recycle stream with steam is comprised between 2.8 and 3.

10. Method for hydrogen production according to any of the previous claims, wherein said electricity fed to said electrical steam reforming is derived from renewable sources, for example solar, wind or hydro.

11. A plant for hydrogen production starting from a hydrocarbon feed, comprising an electrically powered steam reformer (11), a water gas shift reactor (12) downstream said steam reformer (11), a pressure swing adsorber (14) downstream said water gas shift reactor (12), a hydrogen product stream line and an off-gas stream line downstream said pressure swing adsorber (14), a recycle stream line connecting said off gas stream line to said hydrocarbon feed, a recycle stream compressor (15), at least one CO₂ capture system (13, 13'), arranged downstream said electrically powered steam reformer (11), and a split of purge gas separated from the recycle stream line.

## Patentansprüche

1. Verfahren zur Herstellung von Wasserstoff ausgehend von einer Kohlenwasserstoffbeschickung, das die folgenden Schritte umfasst:
- Reaktion der Kohlenwasserstoffbeschickung, die mit einem komprimierten Rücklaufstrom zugesetzt wird, mit Dampf, um einen Gasstrom zu erhalten, der Wasserstoff, Kohlenmonoxid und Kohlendioxid enthält, Syngas;
- Reaktion des Kohlenmonoxids des Gasstroms aus dem vorherigen Schritt mit Wasserdampf, um einen mit Wasserstoff und Kohlendioxid angereicherten Gasstrom zu erhalten;
- Abtrennung von Wasserstoff aus dem angereicherten Gasstrom, um einen Wasserstoffproduktstrom und einen Rückführstrom zu erhalten;
- Komprimieren des Rückführstroms, um einen komprimierten Rückführstrom zu erhalten;
- Mischen des komprimierten Rücklaufstroms mit dem Kohlenwasserstoffeinsatz;
das Verfahren umfasst zusätzlich:
- Bereitstellung von Wärme für den Schritt der Reaktion des Kohlenwasserstoffeinsatzes mit Wasserdampf, wobei die Wärme durch elektrisch betriebene Quellen gewonnen wird;
und alternativ
a) Entfernen von CO₂ aus dem mit Wasserstoff und Kohlendioxid angereicherten Gasstrom vor der Abtrennung von Wasserstoff;
oder
b) Entfernen von CO₂ aus dem komprimierten Rückführungsstrom vor dem Mischen mit dem Kohlenwasserstoffeinsatz; oder
c) Entfernen von CO₂ sowohl aus dem mit Wasserstoff und Kohlendioxid angereicherten Gasstrom vor der Abtrennung des Wasserstoffs als auch aus dem komprimierten Rücklaufstrom vor dem Mischen mit dem Kohlenwasserstoffeinsatz; und
- Entfernung zumindest eines Teils der inerten Bestandteile aus dem Recyclingstrom.

2. Verfahren zur Wasserstofferzeugung nach Anspruch 1, das einen Schritt umfasst:
- Entfernung von Schwefel, Chloriden und Olefinen aus der Kohlenwasserstoffbeschickung, die mit einem komprimierten Rücklaufstrom zugegeben wird, vor der Reaktion mit Dampf.

3. Verfahren zur Wasserstofferzeugung nach Anspruch 1, wobei der Schritt des Entfernens zumindest eines Teils der inerten Komponenten aus dem Rückführstrom durch intermittierendes oder kontinuierliches Spülen eines Teils des Rückführstroms durchgeführt wird, um inerte Komponenten zu entfernen.

4. Verfahren zur Wasserstofferzeugung nach Anspruch 3, wobei CO₂ aus dem Spülstrom entfernt wird.

5. Verfahren zur Wasserstofferzeugung nach Anspruch 3 oder 4, wobei 7 Vol.-% oder weniger des Rücklaufstroms gespült werden, vorzugsweise zwischen 0.1 und 5 Vol.-% des Rücklaufstroms werden gereinigt, vorzugsweise werden etwa 2 Vol.

6. Verfahren zur Wasserstofferzeugung nach einem der Ansprüche 1 bis 5, wobei in dem Fall, in dem CO₂ aus dem mit Wasserstoff und Kohlendioxid angereicherten Gasstrom vor der Abtrennung des Wasserstoffs entfernt wird, die Zusammensetzung des Rückführungsstroms vor dem Mischen mit der Kohlenwasserstoffbeschickung die folgende ist:
CH₄: 14.5-15.5vol%
CO₂: 0.5-1.0vol%
N₂: 34,5-35,5 Vol%
CO: 15,5-16,5 Vol%
H₂: 31,5-32,5 Vol%
H₂O: 1,0-1,5 Vol%

7. Verfahren zur Wasserstofferzeugung nach einem der Ansprüche 1 bis 5, wobei in dem Fall, in dem CO₂ aus dem komprimierten Rücklaufstrom vor dem Mischen mit dem Kohlenwasserstoffeinsatzmaterial entfernt wird, die Zusammensetzung des Rücklaufstroms vor dem Mischen mit dem Kohlenwasserstoffeinsatzmaterial die folgende ist:
CH₄: 11,5-12,5 Vol%
CO₂: 13,0-14,0 Vol%
N₂: 29,0-30,5 Vol%
CO: 16,0-17,0 Vol%
H₂: 26,5-27,5 Vol%
H₂O: 1,0-1,5 Vol%
und zwar vorzugsweise die folgenden: CH₄ 12.04vol%, CO₂ 13.64vol%, N₂ 29.56vol%, CO 16.54vol%, H₂ 27/06vol%, H₂O 1.15vol%.

8. Verfahren zur Wasserstofferzeugung nach einem der Ansprüche 1 bis 5, wobei in dem Fall, in dem CO₂ sowohl aus dem mit Wasserstoff und Kohlendioxid angereicherten Gasstrom vor der Abtrennung des Wasserstoffs als auch aus dem komprimierten Rückführungsstrom vor dem Mischen mit der Kohlenwasserstoffbeschickung entfernt wird, die Zusammensetzung des Rückführungsstroms vor dem Mischen mit der Kohlenwasserstoffbeschickung die folgende ist:
CH₄: 12,0-13,0 Vol%
CO₂: 0,5-1,5 Vol%
N₂: 31,0-32,0 Vol%
CO: 14,5-15,0 Vol%
H₂: 38,5-39,5 Vol%
H₂O: 1,0-1,5 Vol%

9. Verfahren zur Herstellung von Wasserstoff nach einem der vorhergehenden Ansprüche, wobei das Dampf/Kohlenstoff-Verhältnis in dem Schritt der Umsetzung der Kohlenwasserstoffbeschickung, die dem komprimierten Rücklaufstrom zugesetzt wird, mit Dampf zwischen 2,8 und 3 liegt.

10. Verfahren zur Herstellung von Wasserstoff nach einem der vorhergehenden Ansprüche, wobei die der elektrischen Dampfreformierung zugeführte Elektrizität aus erneuerbaren Quellen stammt, zum Beispiel aus Sonnen-, Wind- oder Wasserkraft.

11. Anlage zur Herstellung von Wasserstoff aus einer Kohlenwasserstoffbeschickung, umfassend einen elektrisch betriebenen Dampfreformer (11), einen dem Dampfreformer (11) nachgeschalteten Wassergas-Shift-Reaktor (12), einen dem Wassergas-Shift-Reaktor nachgeschalteten Druckwechseladsorber (14) (12), eine Wasserstoffproduktstromleitung und eine Abgasstromleitung stromabwärts des Druckwechseladsorbers (14), eine Rückführstromleitung, die die Abgasstromleitung mit der Kohlenwasserstoffeinspeisung verbindet, einen Rückführstromkompressor (15), mindestens ein CO₂ - Abscheidesystem (13, 13'), das stromabwärts des elektrisch betriebenen Dampfreformers (11) angeordnet ist, und eine Spülgasaufteilung, die von der Rückführstromleitung getrennt ist.

## Revendications

1. Méthode de production d'hydrogène à partir d'une charge d'hydrocarbures, comprenant les étapes suivantes:
- la réaction de ladite charge d'hydrocarbures ajoutée à un flux de recyclage comprimé avec de la vapeur, pour obtenir un flux de gaz comprenant de l'hydrogène, du monoxyde de carbone et du dioxyde de carbone, le gaz de synthèse;
- faire réagir le monoxyde de carbone du flux gazeux de l'étape précédente avec de la vapeur, afin d'obtenir un flux gazeux enrichi en hydrogène et en dioxyde de carbone;
- séparer l'hydrogène de ce flux de gaz enrichi pour obtenir un flux de produit d'hydrogène et un flux de recyclage;
- comprimer ledit flux de recyclage pour obtenir un flux de recyclage comprimé;
- mélanger ledit flux de recyclage comprimé avec ladite charge d'hydrocarbures;
la méthode comprend en outre
- fournir de la chaleur à ladite étape de réaction de ladite charge d'hydrocarbures avec de la vapeur d'eau, ladite chaleur étant obtenue par des sources d'énergie électrique;
et alternativement
a) éliminer le CO₂ de ce flux gazeux enrichi en hydrogène et en dioxyde de carbone, avant de séparer l'hydrogène;
ou
b) éliminer le CO₂ dudit flux de recyclage comprimé, avant de le mélanger à ladite charge d'hydrocarbures; ou
c) éliminer le CO₂ à la fois dudit flux gazeux enrichi en hydrogène et en dioxyde de carbone, avant de séparer l'hydrogène, et dudit flux de recyclage comprimé, avant de le mélanger à ladite charge d'hydrocarbures; et
- retirer au moins une partie des composants inertes du flux de recyclage.

2. Procédé de production d'hydrogène selon la revendication 1, comprenant une étape de:
- éliminer le soufre, les chlorures et les oléfines de ladite charge d'hydrocarbures ajoutée à un flux de recyclage comprimé, avant de réagir avec de la vapeur.

3. Méthode de production d'hydrogène selon la revendication 1, dans laquelle l'étape d'élimination d'au moins une partie des composants inertes du flux de recyclage est réalisée par purge intermittente ou continue d'une partie du flux de recyclage, afin d'éliminer les composants inertes.

4. Méthode de production d'hydrogène selon la revendication 3, dans laquelle le CO₂ est éliminé du flux de purge.

5. Méthode de production d'hydrogène selon la revendication 3 ou 4, dans laquelle 7 % ou moins du flux de recyclage est purgé, de préférence entre 0. 1 à 5 % du flux de recyclage est purgé, de préférence environ 2 % du flux de recyclage est purgé.

6. Méthode de production d'hydrogène selon l'une des revendications 1 à 5, dans laquelle, dans le cas où le CO₂ est éliminé dudit flux gazeux enrichi en hydrogène et en dioxyde de carbone, avant la séparation de l'hydrogène, la composition du flux de recyclage avant le mélange avec ladite charge d'hydrocarbures est la suivante:
CH₄ : 14,5-15,5 vol%
CO₂ : 0,5-1,0 vol%
N₂ : 34,5-35,5 % vol
CO : 15,5-16,5 % vol
H₂ : 31,5-32,5 % vol
H₂O : 1,0-1,5 % vol

7. Méthode de production d'hydrogène selon l'une des revendications 1 à 5, dans laquelle, dans le cas où le CO₂ est éliminé dudit flux de recyclage comprimé, avant le mélange avec ladite charge d'hydrocarbures, la composition du flux de recyclage avant le mélange avec ladite charge d'hydrocarbures est la suivante:
CH₄: 11,5-12,5 % vol
CO₂: 13,0-14,0 % vol
N₂: 29,0-30,5 % vol
CO: 16,0-17,0 % vol
H₂: 26,5-27,5 % vol
H₂O: 1,0-1,5 % vol
et, de préférence, est le suivant: CH₄ 12,04vol%, CO₂ 13,64vol%, N₂ 29,56vol%, CO 16,54vol%, H₂ 27,06vol%, H₂O 1,15vol%.

8. Méthode de production d'hydrogène selon l'une des revendications 1 à 5, dans laquelle, dans le cas où le CO₂ est éliminé à la fois dudit flux gazeux enrichi en hydrogène et en dioxyde de carbone, avant la séparation de l'hydrogène, et dudit flux de recyclage comprimé, avant le mélange avec ladite charge d'hydrocarbures, la composition du flux de recyclage avant le mélange avec ladite charge d'hydrocarbures est la suivante:
CH₄: 12,0-13,0 % vol
CO₂: 0,5-1,5 % vol
N₂: 31,0-32,0 % vol
CO: 14,5-15,0 % vol
H₂: 38,5-39,5 % vol
H₂O: 1,0-1,5 % vol

9. Méthode de production d'hydrogène selon l'une des revendications précédentes, dans laquelle le rapport vapeur/carbone dans l'étape de réaction à la vapeur de la charge d'hydrocarbures ajoutée au flux de recyclage comprimé est compris entre 2,8 et 3.

10. Méthode de production d'hydrogène selon l'une des revendications précédentes, dans laquelle l'électricité alimentant le reformage électrique à la vapeur provient de sources renouvelables, par exemple l'énergie solaire, éolienne ou hydraulique.

11. Installation pour la production d'hydrogène à partir d'une charge d'hydrocarbures, comprenant un reformeur à vapeur (11) alimenté électriquement, un réacteur de transfert de gaz à l'eau (12) en aval dudit reformeur à vapeur (11), un adsorbeur à oscillation de pression (14) en aval dudit réacteur de transfert de gaz à l'eau (12), une conduite de produit d'hydrogène et une conduite d'effluents gazeux en aval dudit adsorbeur à variation de pression (14), une conduite de recyclage reliant ladite conduite d'effluents gazeux à ladite alimentation en hydrocarbures, un compresseur de flux de recyclage (15), au moins un système de capture du CO₂ (13, 13'), disposé en aval dudit reformeur à vapeur électrique (11), et une division du gaz de purge séparée de la conduite de flux de recyclage.
